# EUROPEAN PATENT APPLICATION

(11) **EP 4 621 980 A1**
(43) Date of publication of application: **24.09.2025**
(21) Application number: 23891274.5
(22) Date of filing: 18.10.2023
(51) Int. Cl.: H01M 50/533, H01M 50/536

(54) **BATTERY**

(30) Priority: 15.11.2022 JP 2022182606
(71) Applicant: Panasonic Energy Co., Ltd., Osaka 570-8511 (JP)
(72) Inventor: MATSUMURA, Suguru, Kadoma-shi, Osaka 571-0057 (JP)
(74) Representative: Novagraaf International SA
(86) International application number: PCT/JP2023/037684
(87) International publication number: WO 2024/106118

(57) **Abstract**

A battery disclosed includes a wound electrode group 50 including a first electrode 51 and a second electrode, and a first current collector plate 80 electrically connected to the first electrode 51. The first electrode 51 includes a first metal foil portion 52 exposed at one end of the electrode group 50 in the axial direction thereof. The first metal foil portion 52 has a first region 53 extending in the radial direction of the electrode group 50 and a second region 54 extending along both sides of the first region 53, in the direction in which the first region 53 extends, and elevated compared to the first region 53. The first current collector plate 80 has a first protruding region 84 protruding from a first main surface 83 facing the first metal foil portion 52 and welded to the first region 53, and a second protruding region 85 spaced apart from the first protruding region 84 and protruding from the first main surface 83, while avoiding the second region 54. A protruding height H1 of the first protruding region 84 is larger than an elevation height H2 of the second region 54. With this configuration, stable welding of the electrode group and the current collector plate can be achieved.

## Description

### [Technical Field]

Present disclosure relates to a battery.

### [Background Art]

Conventionally, a battery having a generally-called end face current collecting configuration has been known (e.g., see Patent Literature 1). The battery in Patent Literature 1 includes a wound electrode group and a current collector plate welded to a protruding foil portion of the electrode group. The welding is performed in a state in which the current collector plate is pressed against the protruding foil portion.

### [Citation List]

### [Patent Literature]

[Patent Literature 1] Japanese Laid-Open Patent Publication No. 2010-257851

### [Summary of Invention]

### [Technical Problem]

However, when the current collector plate is pressed against the protruding foil portion, the protruding foil portion may bend in a random direction, or buckling may occur in the protruding foil portion. When such a phenomenon occurs, the contact state between the protruding foil portion and the current collector plate may not be uniform to make it difficult to perform stable welding of them. Taking into account such circumstances, one object of the present disclosure is to stably weld the electrode group and the current collector plate.

### [Solution to Problem]

One aspect of the present disclosure relates to a battery. The battery includes:

### [Advantageous Effects of Invention]

According to the present disclosure, stable welding of the electrode group and the current collector plate can be achieved.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[FIG. 1] FIG. 1 is a schematic cross-sectional view of an example of a battery according to the present disclosure.
[FIG. 2] FIGS. 2(a) and 2(b) illustrate an electrode group, wherein FIG. 2(a) is a bottom view or a plan view, and FIG. 2(b) is a partial cross-sectional view of metal foil portions taken along a line IIB-IIB.
[FIG. 3] FIGS. 3(a) and 3(b) illustrate current collector plates, wherein FIG. 3(a) is a plan view or a bottom view, and FIG. 3(b) is a cross-sectional view taken along a line **IIIB-**IIIB.
[FIG. 4] FIG. 4 is an end view of current collector plates and metal foil portions welded to each other.

### [Description of Embodiments]]

Embodiments of a battery according to the present disclosure will be described by way of examples, but the present disclosure is not limited to the examples described below. In the following description, specific numerical values and materials may be exemplified in some cases, but other numerical values and other materials may be adopted as long as the effects of the present disclosure can be obtained below.

The battery according to the present disclosure may be a primary battery such as a lithium primary battery, or may be a secondary battery such as an alkaline storage battery (e.g., a nickel-hydrogen battery or a nickel-cadmium battery), a lithium-ion secondary battery, or a lithium-metal secondary battery. In the present disclosure, power storage devices (e.g., a lithium-ion capacitor) in which at least one of the positive electrode and the negative electrode is an electrode that expresses its capacity by the non-Faraday reaction also belong to the category of the secondary battery.

The battery according to the present disclosure is a battery having a generally-called end face current collecting configuration. The battery according to the present disclosure includes an electrode group and a first current collector plate. Although the type of the battery is not particularly limited as described above, a case of a lithium-ion secondary battery will be mainly described below.

The electrode group is a wound electrode group including a first electrode and a second electrode. The electrode group may be configured with the first electrode and the second electrode, wound with a separator therebetween. The outer shape of the electrode group may be cylindrical or prismatic, for example. One of the first electrode and the second electrode is a positive electrode, and the other of the first electrode and the second electrode is a negative electrode.

The first electrode may include a first current collector having a long sheet-like shape and a first active material layer formed on a surface of the first current collector. When the first electrode is the negative electrode of a lithium-ion secondary battery, the first current collector may be constituted of a copper foil or a copper alloy foil. When the first electrode is the negative electrode of a lithium-ion secondary battery, the first active material layer may contain a negative electrode active material (e.g., a carbonaceous material or a silicon-containing material), a conductive agent, and a binder, for example. Note that the first active material layer may not be provided.

The second electrode may include a second current collector having a long sheet-like shape and a second active material layer formed on a surface of the second current collector. When the second electrode is the positive electrode of a lithium-ion secondary battery, the second current collector may be constituted of an aluminum foil or an aluminum alloy foil. When the second electrode is the positive electrode of a lithium-ion secondary battery, the second active material layer may contain a positive electrode active material (e.g., a lithium-containing transition metal oxide), a conductive agent, and a binder, for example.

The separator may be constituted of a porous sheet having ionic permeability and insulating properties. Examples of the porous sheet include a thin film having micropores, a woven fabric, and a nonwoven fabric.

The first electrode includes a first metal foil portion exposed at one end of the electrode group in the axial direction thereof. The first metal foil portion is a region of the first current collector where the first active material layer is not formed, that is, an area where the first current collector is exposed.

The first metal foil portion has a first region and a second region. The first region is an area extending in the radial direction of the electrode group. The first metal foil portion may have a plurality of first regions. The second region is an area that extends along both sides of the first region, in the direction in which the first region extends, and that is elevated compared to the first region. A first protruding region of the first current collector plate is welded to the first region as will be described later. The first region and the second region are formed by deforming, along a predetermined shape, the first current collector protruding from an end face of the electrode group, for example.

The first current collector plate is electrically connected to the first electrode. The first current collector plate may be constituted of, for example, a metal containing iron as a main component. The shape of the first current collector plate is not particularly limited, and may be cross-shaped, I-shaped, or disk-shaped, for example.

The first current collector plate has a first protruding region and a second protruding region. The first protruding region protrudes from a first main surface facing the first metal foil portion of the first electrode and is welded to the first region. This welding establishes electric connection between the first current collector plate and the first electrode. The second protruding region is spaced apart from the first protruding region and protrudes from the first main surface, while avoiding the second region of the first electrode. In the above configuration, a recess is formed between the first protruding region and the second protruding region correspondingly to the second region of the first electrode.

The protruding height of the first protruding region (the distance from the first main surface to the protruding edge of the first protruding region) is larger than the elevation height of the second region (the distance from the surface of the first region to the protruding edge of second region). In order that the first protruding region is welded to the first region of the first metal foil portion, the first protruding region needs to be brought into contact with the first region. In doing so, the first protruding region comes into contact with the first region before the second region comes into contact with the first main surface of the first current collector plate because of the size relationship as above. Therefore, the second region elevated compared to the first region in the first metal foil portion is accommodated in the recess between the first protruding region and the second protruding region, and does not make strong contact with the first current collector plate. Further, even when the first current collector plate is about to incline with the first protruding region being in contact with the first region of the first metal foil portion, the inclination can be restricted by the second protruding region hitting the first metal foil portion. As a result, the first region of the first metal foil portion and the first protruding region of the first current collector plate are favorably in contact with each other, thereby achieving stable welding of the first electrode of the electrode group to the first current collector plate.

The second protruding region may be provided at least at an outer peripheral part of the first current collector plate. The outer peripheral part of the first current collector plate is a part that largely displaces in response to inclination of the first current collector plate in a state in which the first protruding region is in contact with the first region of the first metal foil portion. The first current collector plate is likely to hit the second protruding region located at the outer peripheral part such as above when the first current collector plate inclines. This makes it possible to further reduce inclination of the first current collector plate. In addition, as a result of the second protruding region being provided at the outer peripheral part of the first current collector plate, the first metal foil portion can be prevented from being displaced radially outward of the electrode group.

The protruding height of the first protruding region (the distance from the first main surface to the protruding end of the first protruding region) may be larger than the protruding height of the second protruding region (the distance from the first main surface to the protruding end of the second protruding region). With the above size relationship, when the first protruding region is brought into contact with the first region of the first metal foil portion, the first protruding region can come into contact with the first region before the second protruding region comes into contact with the first metal foil portion. Therefore, the contact between the first region of the first metal foil portion and the first protruding region of the first current collector plate is not hindered by the second protruding region.

According to the present disclosure, provision of the first protruding region and the second protruding region on the first current collector plate as described above can achieve stable welding of the first electrode of electrode group and the first current collector plate.

Hereinafter, an example of the battery according to the present disclosure will be described in detail with reference to the drawings. The above-described elements of configuration can be applied to the elements of configuration of the exemplary battery described below. The elements of configuration of the exemplary battery described below can be altered based on the above description. Further, the matters described below may be applied to the above-described embodiments. Among the elements of configuration of the exemplary battery described below, an element of configuration that are not essential to the battery according to the present disclosure may be omitted. It should be noted that the drawings indicated below are schematic and do not accurately reflect the shape or number of actual members.

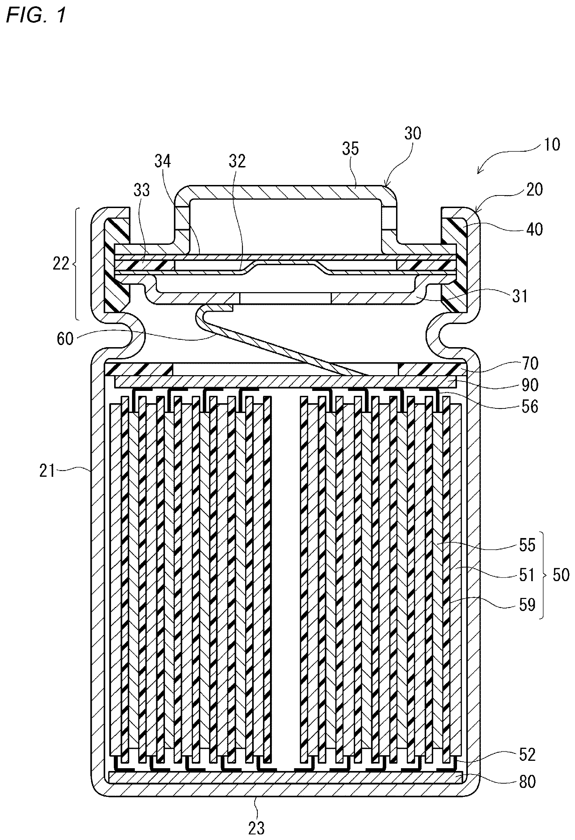

A battery 10 of the present embodiment is configured as a lithium-ion secondary battery, but is not limited thereto. As illustrated in FIG. 1, the battery 10 includes a case 20, a sealing unit 30, an electrode group 50, a negative electrode current collector plate 80, and a positive electrode current collector plate 90.

The case 20 is formed in a bottomed cylindrical shape having an opening at one end (an upper end in FIG. 1) thereof. The case 20 includes a side wall 21 formed in a cylindrical shape and a disk-shaped bottom 23. A crimped part 22 that fixes the sealing unit 30 is formed in an area of the side wall 21 near the opening. The case 20 in the present embodiment is constituted of a metal containing iron as a main component, but is not limited thereto.

The sealing unit 30 seals the opening of the case 20. The sealing unit 30 has a configuration in which a filter 31, a lower valve body 32, an insulating member 33, an upper valve body 34, and a cap 35 are stacked in the stated order from the side of the electrode group 50. Each member constituting the sealing unit 30 has, for example, a disk shape or a ring shape, and the members except the insulating member 33 are electrically connected to each other. The insulating member 33 is constituted of an insulative resin, and the other members are constituted of metal. The sealing unit 30 is fixed to the crimped part 22 of the case 20 via a gasket 40 having insulating properties.

The electrode group 50 is housed in the case 20 and includes a negative electrode 51 and a positive electrode 55. The electrode group 50 is a wound electrode group of the negative electrode 51 and the positive electrode 55, wound with a separator 59 therebetween. The outer shape of the electrode group 50 is cylindrical. The negative electrode 51 is electrically connected to the bottom 23 of the case 20 via the negative electrode current collector plate 80. In the above configuration, the case 20 functions as an external negative electrode terminal of the battery 10. The positive electrode 55 is electrically connected to the filter 31 of the sealing unit 30 via the positive electrode current collector plate 90 and a positive electrode lead 60. In the above configuration, the cap 35 of the sealing unit 30 functions as an external positive electrode terminal of the battery 10. A ring-shaped insulating plate 70 is provided between the electrode group 50 and the sealing unit 30. The negative electrode 51 is an example of the first electrode, and the positive electrode 55 is an example of the second electrode.

The negative electrode 51 includes a negative electrode metal foil portion 52 exposed at one end (lower end in FIG. 1) of the electrode group 50 in the axial direction thereof. The negative electrode metal foil portion 52 is an area of the negative electrode current collector where the negative electrode active material layer is not formed. The negative electrode metal foil portion 52 is an example of the first metal foil portion.

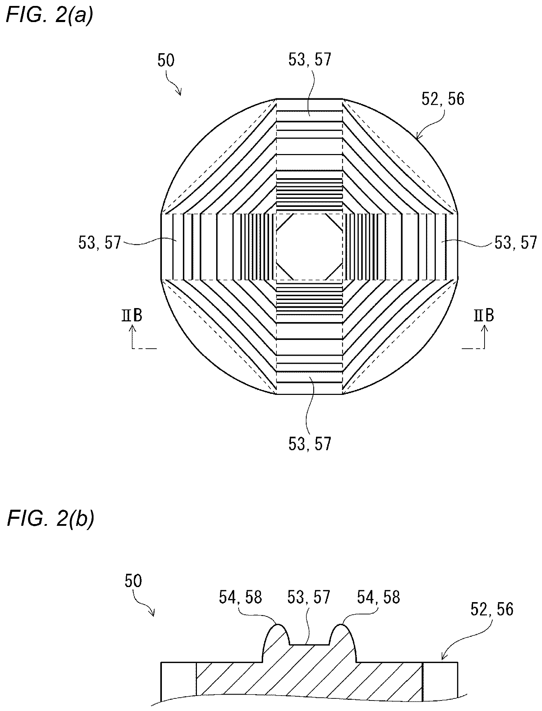

As illustrated in FIG. 2, the negative electrode metal foil portion 52 has a first region 53 and a second region 54. The first region 53 is an area extending in the radial direction of the electrode group 50. The second region 54 is an area that extends along both sides of the first region 53, in the direction in which the first region 53 extends, and that is elevated compared to the first region 53. A first protruding region 84 (described later) of the negative electrode current collector plate 80 is welded to the first region 53. The negative electrode current collector is folded radially inward around the second region 54.

The positive electrode 55 includes a positive electrode metal foil portion 56 exposed at the other end (upper end in FIG. 1) of the electrode group 50 in the axial direction thereof. The positive electrode metal foil portion 56 is an area of the positive electrode current collector where the positive electrode active material layer is not formed. The positive electrode metal foil portion 56 is an example of the second metal foil portion.

As illustrated in FIG. 2, the positive electrode metal foil portion 56 has a third region 57 and a fourth region 58. The third region 57 is an area extending in the radial direction of the electrode group 50. The fourth region 58 is an area that extends along both sides of the third region 57, in the direction in which the third region 57 extends, and that is elevated compared to the third region 57. A third protruding region 94 (described later) of the positive electrode current collector plate 90 is welded to the third region 57. The positive electrode current collector is folded radially inward around the fourth region 58.

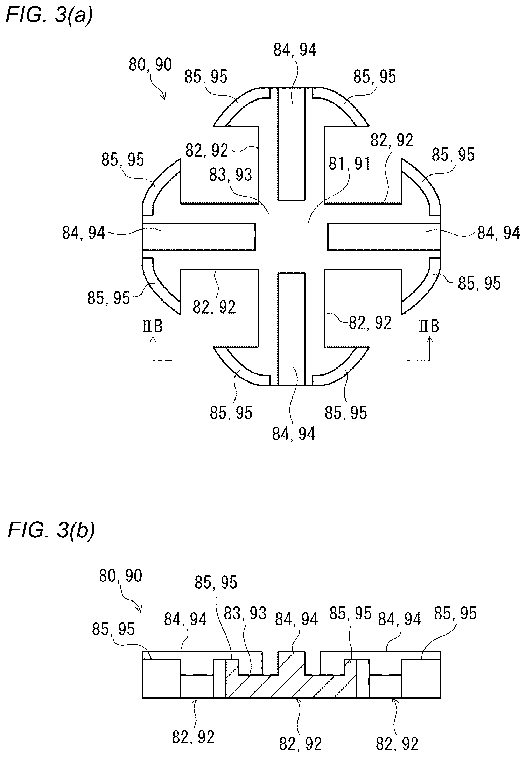

The negative electrode current collector plate 80 is electrically connected to the negative electrode 51. As illustrated in FIG. 3, the negative electrode current collector plate 80 is formed in a substantially cross shape. The negative electrode current collector plate 80 has a first central part 81 and four first arm parts 82 extending radially from the first central part 81. The negative electrode current collector plate 80 is an example of the first current collector plate.

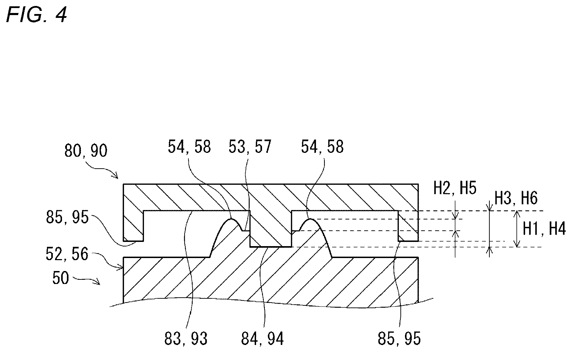

Each of the first arm parts 82 has a first protruding region 84 and a second protruding region 85. As illustrated in FIG. 4, the first protruding region 84 protrudes from a first main surface 83 facing the negative electrode metal foil portion 52 and is welded to the first region 53. The first protruding region 84 extends in the direction in which the first arm parts 82 extends. The second protruding region 85 is spaced apart from the first protruding region 84 and protrudes from the first main surface 83, while avoiding the second region 54 of the negative electrode 51. The second protruding region 85 is provided at the distal end area of each first arm part 82 (i.e., the outer periphery of the negative electrode current collector plate 80).

A protruding height H1 of the first protruding region 84 is larger than an elevation height H2 of the second region 54. In addition, the protruding height H1 of the first protruding region 84 is larger than a protruding height H3 of the second protruding region 85.

The positive electrode current collector plate 90 is electrically connected to the positive electrode 55. As illustrated in FIG. 3, the positive electrode current collector plate 90 is formed in a substantially cross shape. The positive electrode current collector plate 90 has a second central part 91 and four second arm parts 92 extending radially from the second central part 91. The positive electrode current collector plate 90 is an example of the second current collector plate.

Each of the second arm parts 92 has a third protruding region 94 and a fourth protruding region 95. As illustrated in FIG. 4, the third protruding region 94 protrudes from a second main surface 93 facing the positive electrode metal foil portion 56 and is welded to the third region 57. The third protruding region 94 extends in the direction in which the second arm parts 92 extends. The fourth protruding region 95 is spaced apart from the third protruding region 94 and protrudes from the second main surface 93, while avoiding the fourth region 58 of the positive electrode 55. The fourth protruding region 95 is provided in the distal end area of each second arm part 92 (i.e., the outer periphery of the positive electrode current collector plate 90).

A protruding height H4 of the third protruding region 94 is larger than an elevation height H5 of the fourth region 58. In addition, the protruding height H4 of the third protruding region 94 is larger than a protruding height H6 of the fourth protruding region 95.

### <<Supplemental Remarks>>

According to the above description of the embodiments, the following techniques are disclosed.

### (Technique 1)

A battery including:
(Technique 2)
   The battery according to Technique 1, wherein
(Technique 3)
   The battery according to Technique 1 or 2, wherein

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

Present disclosure can be used for batteries.

### [Reference Signs List]

10: Battery
   20: Case
      21: Side wall
      22: Crimped part
      23: Bottom
   30: Sealing unit
      31: Filter
      32: Lower valve body
      33: Insulating member
      34: Upper valve body
      35: Cap
   40: Gasket
   50: Electrode group
      51: Negative electrode (first electrode)
         52: Negative electrode metal foil portion (first metal foil portion)
            53: First region
            54: Second region
      55: Positive electrode (second electrode)
         56: Positive electrode metal foil portion (second metal foil portion)
            57: Third area
            58: Fourth region
      59: Separator
   60: Positive electrode lead
   70: Insulating plate
   80: Negative electrode current collector plate (first current collector plate)
      81: First central part
      82: First arm part
         83: First main surface
         84: First protruding region
         85: Second protruding region
   90: Positive electrode current collector plate (second current collector plate)
      91: Second central part
      92: Second arm part
         93: Second main surface
         94: Third protruding region
         95: Fourth protruding region
H1: Protruding height of first protruding region
H2: Elevation height of second region
H3: Protruding height of second protruding region
H4: Protruding height of third protruding region
H5: Elevation height of fourth region
H6: Protruding height of the fourth protruding region

## Claims

1. A battery comprising:
a wound electrode group including a first electrode and a second electrode; and
a first current collector plate electrically connected to the first electrode, wherein
the first electrode includes a first metal foil portion exposed at one end of the electrode group in an axial direction thereof,
the first metal foil portion has a first region that extends in a radial direction of the electrode group, and a second region that extends along both sides of the first region, in a direction in which the first region extends, and that is elevated compared to the first region,
the first current collector plate has a first protruding region that protrudes from a first main surface facing the first metal foil portion and that is welded to the first region, and a second protruding region spaced apart from the first protruding region and protruding from the first main surface, while avoiding the second region, and
a protruding height of the first protruding region is larger than an elevation height of second region.

2. The battery according to claim 1, wherein
the second protruding region is provided at least at an outer peripheral part of the first current collector plate.

3. The battery according to claims 1 or 2, wherein
the protruding height of the first protruding region is larger than a protruding height of the second protruding region.
